# FASCICULE DE BREVET EUROPEEN

(11) **EP 4 112 474 B1**
(45) Date de publication et mention de la délivrance du brevet: **12.02.2025**
(21) Numéro de dépôt: 22181100.3
(22) Date de dépôt: 24.06.2022
(51) Int. Cl.: B64D 15/16, B64D 13/06

(54) **SYSTÈME D' ALIMENTATION AMÉLIORÉ EN AIR, POUR UN ENSEMBLE DE DÉGIVRAGE PNEUMATIQUE D' AÉRONEF, ET AÉRONEF COMPRENANT UN TEL SYSTÈME D' ALIMENTATION EN AIR**
VERBESSERTES LUFTZUFUHRSYSTEM FÜR EINE PNEUMATISCHE ENTEISUNGSEINHEIT EINES LUFTFAHRZEUGS UND LUFTFAHRZEUG MIT EINEM SOLCHEN LUFTZUFUHRSYSTEM
IMPROVED AIR SUPPLY SYSTEM FOR A PNEUMATIC DE-ICING ASSEMBLY FOR AN AIRCRAFT, AND AIRCRAFT COMPRISING SUCH AN AIR SUPPLY SYSTEM

(30) Priorité: 29.06.2021 FR 2106968
(43) Date de publication de la demande: 04.01.2023
(73) Titulaire: Airbus Operations SAS, 31060 Toulouse (FR); Airbus Operations GmbH, 21129 Hamburg (DE)
(72) Inventeur: HUET, Florent, 31060 TOULOUSE (FR); JOSSET, Thomas, 31060 TOULOUSE (FR); BAMMANN, Holger, 21129 HAMBURG (DE); GOURGUES, Marion, 31060 TOULOUSE (FR)
(74) Mandataire: Cabinet Le Guen Maillet

(56) Documents cités:
- GB-A- 2 174 348
- US-A1- 2013 341 465
- US-A1- 2018 170 564
- US-A1- 2020 247 548
- US-A1- 2020 346 762

## Description

### DOMAINE TECHNIQUE

La présente invention concerne les systèmes de dégivrage de surfaces d'aéronef, et plus particulièrement l'alimentation en air de systèmes de dégivrage pneumatiques pour aéronef. L'invention concerne également un aéronef comprenant un système de dégivrage pneumatique.

### ETAT DE LA TECHNIQUE ANTERIEURE

Plusieurs méthodes de dégivrage existent pour retirer la glace et le givre accumulés sur un aéronef. Ces méthodes peuvent différer selon que l'aéronef évolue au sol ou en vol. Certaines méthodes utilisent des tapis gonflables (ou tapis gonflants) agencés sur des surfaces extérieures de l'aéronef, notamment sur les bords d'attaque et les stabilisateurs de l'aéronef. Ces tapis gonflables comprennent généralement une pluralité de chambres gonflables qui sont gonflées et dégonflées successivement, alternativement ou en même temps, si nécessaire, pour briser la glace accumulée. Ces systèmes de dégivrage par tapis gonflables sont généralement alimentés par de l'air pressurisé prélevé dans les moteurs de l'aéronef pour opérer un gonflage ou un dégonflage de tapis agencés sur les surfaces de l'aéronef. Un gonflage peut être opéré par application directe d'un flux d'air sous pression et un dégonflage peut être opéré via la création d'un flux d'aspiration, à partir d'un flux d'air sous pression. Or, certains aéronefs sont mus par des moteurs électriques qui ne peuvent fournir l'air pressurisé requis pour un système de dégivrage pneumatique. En outre, il peut parfois être avantageux de ne pas extraire d'air des moteurs d'un avion, par exemple pour économiser du carburant en réduisant la masse de l'avion par l'enlèvement d'éléments liés à une utilisation d'air en provenance des moteurs.

Il existe donc un besoin d'opérer une fourniture d'air pour un système de dégivrage pneumatique d'un aéronef mu par un ou plusieurs moteurs électriques ou configuré sans prélèvement d'air moteur.

Les documents US2020/346762A1 et US2020/247548A1 décrivent chacun un système de fourniture d'air dans un aéronef, prévu pour fournir de l'air à un système de conditionnement d'air de l'aéronef ainsi qu'à un système de dégivrage de l'aéronef.

Le document US2013/341465A1 décrit un système à bord d'un aéronef, prévu pour fournir de l'air comprimé à un système de dégivrage de l'aéronef à partir d'air rejeté par un système de conditionnement d'air d'une cabine de l'aéronef.

### EXPOSE DE L'INVENTION

La présente invention vise notamment à alimenter un ensemble de dégivrage pneumatique d'un aéronef à partir d'une autre source que son ou ses moteurs.

A cet effet, l'invention a pour objet un aéronef comprenant un système d'alimentation en air pour un ensemble de dégivrage pneumatique de surfaces d'un aéronef, l'aéronef comprenant un système de conditionnement d'air de type ECS, alimenté par l'intermédiaire d'au moins un premier compresseur d'alimentation connecté à un dispositif de prélèvement d'air extérieur à l'aéronef via au moins une conduite d'air, le système d'alimentation en air comprenant une entrée d'alimentation en air de l'ensemble de dégivrage pneumatique reliée à une sortie dudit au moins un premier compresseur d'alimentation de sorte à y prélever de l'air et à gonfler ou dégonfler un tapis gonflant de l'ensemble de dégivrage pneumatique avec tout ou partie de l'air ainsi prélevé et comprenant un compresseur additionnel configuré pour fournir de l'air vers l'entrée d'alimentation en air de l'ensemble de dégivrage, à partir de ladite sortie dudit premier compresseur d'alimentation.

Le système d'alimentation en air selon l'invention, configuré pour alimenter un ensemble de dégivrage pneumatique de surfaces d'aéronef, peut également comporter les caractéristiques suivantes, considérées seules ou en combinaison :
- Le système d'alimentation en air comprend un deuxième compresseur d'alimentation connecté à un dispositif de prélèvement d'air extérieur à l'aéronef via au moins une conduite d'air configuré pour alimenter au moins le système de conditionnement d'air, et l'entrée de l'ensemble de dégivrage pneumatique est en outre reliée à une sortie du deuxième compresseur d'alimentation.

L'invention a également pour objet un procédé de dégivrage de surfaces d'un aéronef selon la revendication 4.

Selon un mode de réalisation, l'aéronef est configuré pour être propulsé uniquement par des moteurs électriques.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement une architecture de système d'alimentation en air d'un ensemble de dégivrage pneumatique d'aéronef qui n'est pas conforme à l'invention revendiquée ;
[Fig. 2] illustre schématiquement l'architecture du système d'alimentation en air d'un ensemble de dégivrage déjà représenté sur la Fig. 1, selon un mode de réalisation conforme à l'invention revendiquée ;
[Fig. 3] illustre schématiquement l'architecture de système d'alimentation en air d'un ensemble de dégivrage pneumatique d'aéronef, selon un deuxième mode de réalisation qui n'est pas conforme à l'invention revendiquée ;
[Fig. 4] illustre schématiquement l'architecture du système d'alimentation en air d'un ensemble de dégivrage déjà représenté sur la Fig. 3, selon une variante du deuxième mode de réalisation qui n'est pas conforme à l'invention revendiquée ; et,

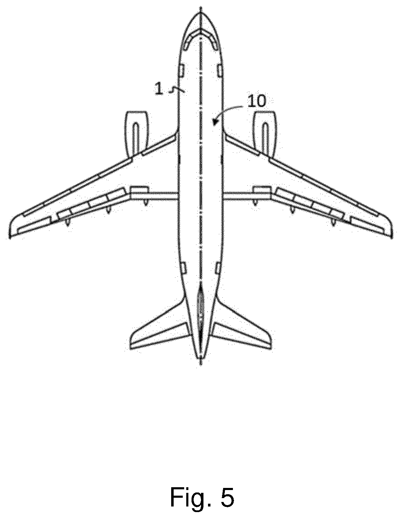

[Fig. 5] illustre un aéronef comprenant un système d'alimentation en air d'un ensemble de dégivrage tel que représenté sur l'une des Fig.1, Fig. 2, Fig. 3 et Fig. 4.

### EXPOSE DETAILLE DE MODES DE REALISATION

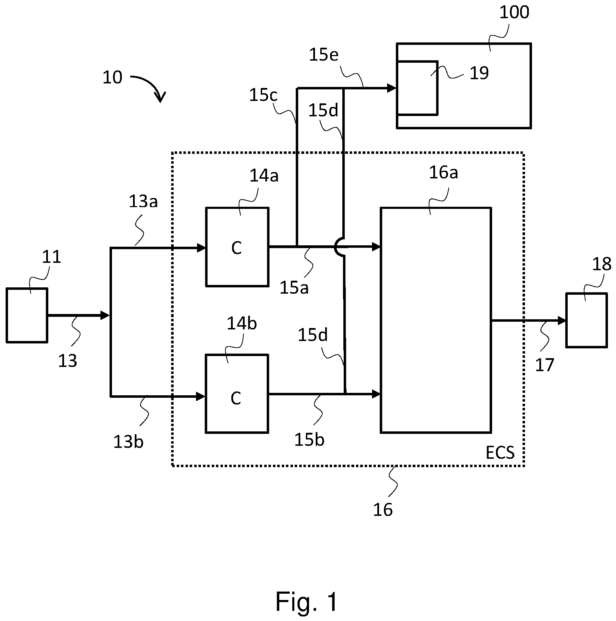

La Fig. 1 représente schématiquement un système d'alimentation en air 10 pour alimenter en air un ensemble de dégivrage pneumatique 100 d'un aéronef, qui n'est pas conforme à l'invention revendiquée. Tous les éléments schématisés représentés sur la Fig. 1 sont donc agencés dans l'aéronef qui comprend l'ensemble de dégivrage pneumatique 100. L'ensemble de dégivrage pneumatique 100 comprend une entrée d'air 19 reliée à une conduite d'air 15e. Selon des variantes, l'ensemble de dégivrage pneumatique 100 comprend une pluralité d'entrées d'air similaires à l'entrée d'air 19 et reliées à la conduite d'air 15e.

L'aéronef comprenant le système de dégivrage pneumatique 100 comprend en outre un système de conditionnement d'air ECS 16, de type ECS, configuré notamment pour fournir de l'air pressurisé et dont la température est contrôlée, dans la cabine passagers et dans la cabine de pilotage de l'aéronef. Le système de conditionnement d'air ECS 16 est usuellement nommé ECS (du sigle anglais « *Environmental Control System* »). Pour ce faire, de l'air extérieur à l'aéronef est prélevé via une entrée d'air extérieur 11, encore appelée « écope » 11, puis dirigé dans au moins une conduite d'air 13 et 13a vers au moins un compresseur d'alimentation (en air) 14a qui constitue un premier étage de compresseur du système de conditionnement d'air ECS 16. Un tel premier étage de compresseur de système de conditionnement d'air est également nommé « premier compresseur » de conditionnement d'air. Dans la suite de la présente description, on nomme indifféremment un tel compresseur « premier compresseur », « compresseur d'alimentation », « compresseur d'alimentation en air » ou « premier compresseur d'alimentation ». Selon un mode particulier de réalisation, deux premiers compresseurs d'alimentation 14a et 14b, respectivement reliés à deux entrées d'un sous-ensemble 16a du système de conditionnement d'air ECS 16, sont utilisés. Ainsi, si une anomalie de fonctionnement survient pour l'un quelconque des deux premiers compresseurs d'alimentation 14a et 14b, l'autre de ces compresseurs d'alimentation peut être configuré pour pallier cette anomalie, de sorte que le système de conditionnement d'air ECS 16 conserve un niveau de performances adapté à des conditions de vol. Les sorties respectives des compresseurs d'alimentation 14a et 14b sont respectivement reliées à des entrées du sous-ensemble 16a du système de conditionnement d'air ECS 16 via des conduites d'air 15a et 15b. Selon une variante, une même entrée d'air alimente les deux compresseurs d'alimentation 14a et 14b.

Selon une variante encore, un seul compresseur d'alimentation 14a ou 14b peut être implémenté et fournir alors de l'air comprimé à une entrée du sous-ensemble 16a du système de conditionnement d'air ECS 16, à partir d'air extérieur prélevé via l'écope 11 et acheminé via une conduite 13 et 13a ou 13 et 13b (selon que le compresseur 14a ou 14b soit implémenté). Le système de conditionnement d'air ECS 16 comprend une sortie d'air 18 permettant d'extraire de l'air des volumes de l'aéronef alimentés en air conditionné. L'air à extraire est acheminé vers la sortie d'air 18 via une conduite d'air 17.

Le système de conditionnement d'air ECS 16 est un système de conditionnement d'air classiquement utilisé dans un aéronef et son architecture interne n'est pas détaillée ici dans la mesure où celle-ci n'est pas utile à la compréhension de l'invention.

Astucieusement et avantageusement, la conduite d'air 15e configurée et utilisée pour acheminer de l'air jusqu'à l'entrée d'air 19 du système de dégivrage pneumatique 100 est reliée aux sorties des premiers compresseurs 14a et 14b de l'étage de compression nativement dévolu au système de conditionnement d'air ECS 16. En d'autres termes, la conduite d'air 15e permettant un acheminement d'air vers l'ensemble 100 de dégivrage pneumatique est reliée aux conduites d'air 15a et 15b via des conduites d'air 15c et 15d. Ainsi, l'air utilisé en entrée de l'ensemble de dégivrage pneumatique 100 est extrait après le premier étage de compresseurs du système de conditionnement d'air 16. Selon ce mode de réalisation, le prélèvement d'air opéré requiert de prélever et de pressuriser plus d'air que cela est réalisé dans une configuration selon l'art antérieur. L'écope 11 et le premier étage de compresseurs comprenant le compresseur d'alimentation 14a et/ou le compresseur d'alimentation 14b doivent être adaptés.

Un prélèvement d'air en sortie du premier étage de compression, soit en sortie d'au moins l'un des compresseurs d'alimentation 14a et 14b, n'implique pas forcément que l'air soit prélevé directement à la sortie du compresseur d'alimentation. L'air peut être prélevé sur un élément connecté à la sortie du compresseur d'alimentation, tel qu'une conduite, une dérivation, ou un autre élément quelconque du système d'alimentation, situé entre une sortie du premier étage de compression (d'un premier compresseur d'alimentation) et une entrée du sous-ensemble 16a du système de conditionnement d'air ECS 16. Selon un mode de réalisation, le sous-ensemble 16a du système de conditionnement d'air ECS 16 comprend l'ensemble des installations de conditionnement d'air de la cabine passagers, de la cabine de pilotage et des soutes de l'aéronef. En d'autres termes et selon ce premier mode de réalisation, l'air prélevé en vue d'alimenter en air l'ensemble de dégivrage pneumatique 100 est prélevé en aval du premier étage de compression et en amont du sous-ensemble de conditionnement d'air 16a. Le terme « en aval » désignant ici un positionnement relatif vers la sortie d'air 18 et le terme « en amont » désignant ici un positionnement relatif vers l'entrée d'air (ou écope) 11.

Dans le cas où la pression de l'air prélevé n'est pas suffisante pour l'alimentation du système de dégivrage pneumatique 100, un compresseur additionnel (non représenté sur la Fig. 1) est ajouté.

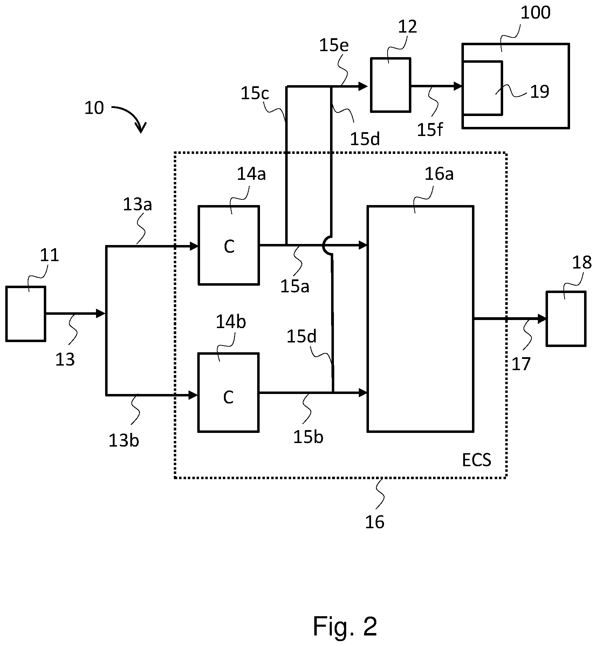

La Fig. 2 représente un mode de réalisation comprenant un compresseur additionnel 12 dont l'entrée est reliée à la conduite d'air 15e, et la sortie est connectée à l'entrée d'air 19 de l'ensemble de dégivrage pneumatique 100 via une conduite d'air 15f. Le compresseur additionnel 12 est configuré pour fournir un niveau de pression d'air suffisant pour un fonctionnement satisfaisant du système de dégivrage pneumatique 100.

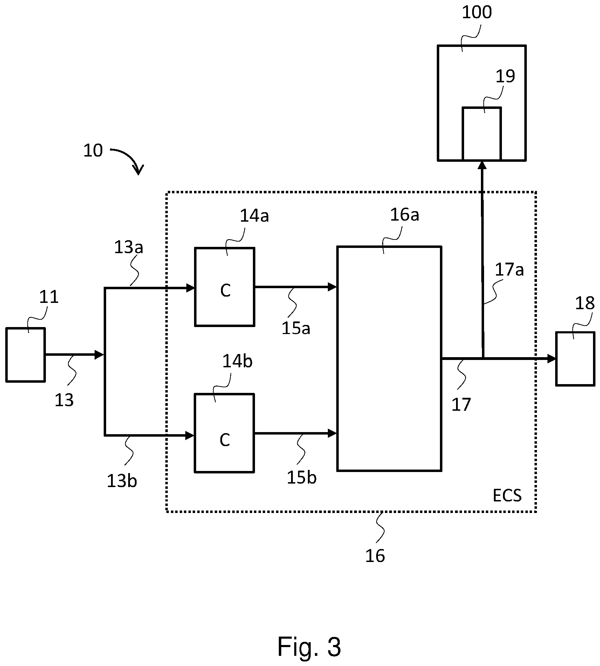

La Fig. 3 représente schématiquement un système d'alimentation en air 10 pour alimenter en air un ensemble de dégivrage pneumatique 100 d'un aéronef, selon un deuxième mode de réalisation qui n'est pas conforme à l'invention. Tous les éléments schématisés représentés sur la Fig. 3 sont donc agencés dans l'aéronef qui comprend l'ensemble de dégivrage pneumatique 100. L'ensemble de dégivrage pneumatique 100 comprend une entrée d'air 19 reliée à une conduite d'air 17a. Selon des variantes, l'ensemble de dégivrage pneumatique 100 comprend une pluralité d'entrées d'air similaires à l'entrée d'air 19 et reliées à la conduite d'air 17a.

Les éléments 11, 13, 13a, 13b, 14a, 14b, 15a, 15b, ECS 16, 16a, 18 et 19 sont inchangés par rapport au premier mode de réalisation, hormis qu'un prélèvement astucieusement réalisé en sortie du système de conditionnement d'air ECS 16 ne requiert pas d'adapter l'écope 11 et le premier étage de compression comprenant les compresseurs 14a et 14b, ce qui est particulièrement avantageux. En effet, selon cette configuration, l'air prélevé pour le fonctionnement du système de dégivrage est de l'air qui aurait été rejeté à l'extérieur de l'aéronef, dans une configuration selon l'art antérieur. Le débit d'air écopé en entrée de l'aéronef n'a donc pas besoin d'être augmenté. Un prélèvement d'air en sortie du système de conditionnement d'air n'implique pas que l'air soit prélevé directement en sortie, mais à partir d'un élément connecté directement ou indirectement à la sortie, tel que, par exemple, une conduite, ou une dérivation, ou encore un élément quelconque utile au déplacement de l'air issu du système de conditionnement d'air ECS 16. En d'autres termes, l'air prélevé pour alimenter l'ensemble de dégivrage pneumatique 100 selon ce deuxième mode de réalisation est prélevé en aval du système de conditionnement d'air ECS 16 (et donc du sous-ensemble 16a de conditionnement d'air) et en amont de la sortie d'air 18. Là encore, le terme « en aval » désigne ici un positionnement relatif vers la sortie d'air 18, et le terme « en amont » désigne ici un positionnement relatif vers l'entrée d'air (ou écope) 11.

Avantageusement, comme le prélèvement en aval du système de conditionnement d'air ECS 16 ne requiert pas de modifier le dimensionnement de l'entrée d'air 11, il n'y a possiblement aucune incidence sur les caractéristiques aérodynamiques de l'aéronef par rapport à une configuration selon l'art antérieur.

Le système de conditionnement d'air ECS 16 amenant déjà l'air à une pression proche de celle requise, seul un supplément de pression peut être nécessaire et le gain en énergie en est encore accru par rapport au premier mode de réalisation.

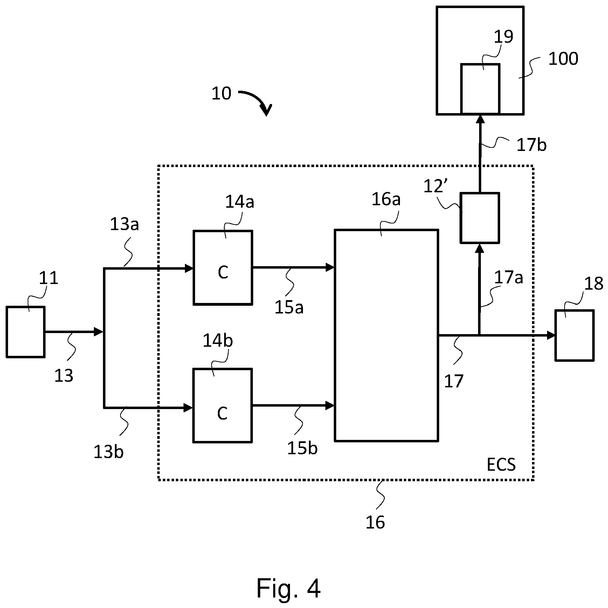

La Fig.4 représente une variante du deuxième mode de réalisation, qui n'est pas conforme à l'invention revendiquée, comprenant un compresseur additionnel 12' dont l'entrée est reliée à la conduite d'air 17a, et la sortie est connectée à l'entrée d'air 19 de l'ensemble de dégivrage pneumatique 100 via une conduite d'air 17b. Le compresseur additionnel 12' est configuré pour fournir l'éventuel supplément de compression utile au fonctionnement du système de dégivrage pneumatique 100.

Avantageusement, les premier et deuxième modes de réalisation décrits permettent de s'affranchir d'avoir à prélever de l'air au niveau des moteurs de l'aéronef, ce qui est particulièrement avantageux dans le cas des configurations moteurs dites « *bleedless* » (de l'anglais, et qui signifie « sans prélèvement »), ou encore dans le cas de moteurs électriques.

## Revendications

1. Aéronef (1) comprenant un ensemble de dégivrage (100) pneumatique de surfaces de l'aéronef, un système d'alimentation en air (10) pour l'ensemble de dégivrage (100) pneumatique de surfaces de l'aéronef et un système de conditionnement d'air (ECS 16) comprenant au moins un premier compresseur d'alimentation (14a) connecté à un dispositif de prélèvement (11) d'air extérieur à l'aéronef (1) via au moins une conduite d'air (13, 13a), le système d'alimentation en air (10) étant tel qu'une entrée d'alimentation en air (19) dudit ensemble de dégivrage (100) pneumatique est reliée à une sortie dudit au moins un premier compresseur d'alimentation (14a) de sorte à y prélever de l'air et à gonfler ou dégonfler un tapis gonflant de l'ensemble de dégivrage (100) pneumatique avec tout ou partie de l'air ainsi prélevé, le système d'alimentation en air comprenant un compresseur additionnel (12, 12') configuré pour fournir de l'air vers l'entrée d'alimentation en air (19) de l'ensemble de dégivrage, à partir de ladite sortie dudit premier compresseur d'alimentation (14a).

2. Aéronef (1) selon la revendication précédente, dans lequel le système d'alimentation en air (10) comprend un deuxième compresseur d'alimentation (14b) connecté à un dispositif de prélèvement (11) d'air extérieur à l'aéronef (1) via au moins une conduite d'air (13, 13b) configuré pour alimenter au moins ledit système de conditionnement d'air (ECS 16), et dans lequel ladite entrée (19) dudit ensemble de dégivrage (100) est en outre reliée à une sortie dudit deuxième compresseur d'alimentation (14b).

3. Aéronef (1) selon l'une quelconque des revendications 1 et 2, configuré pour être propulsé uniquement par des moteurs électriques.

4. Procédé de dégivrage de surfaces d'un aéronef (1), exécuté dans un système d'alimentation en air (10) pour un ensemble de dégivrage (100) pneumatique de surfaces de l'aéronef (1), l'aéronef (1) comprenant ledit système d'alimentation en air (10), ledit ensemble de dégivrage (100) pneumatique, ainsi qu'un système de conditionnement d'air (ECS 16), le système de conditionnement d'air (ECS 16) comprenant au moins un compresseur d'alimentation (14a, 14b) connecté à un dispositif de prélèvement (11) d'air extérieur à l'aéronef (1) via au moins une conduite d'air (13, 13a), le système d'alimentation en air (10) étant agencé de sorte qu'une entrée d'alimentation en air (19) dudit ensemble de dégivrage (100) pneumatique est reliée à une sortie dudit au moins un compresseur d'alimentation (14a), le procédé de dégivrage comprenant les étapes suivantes :
- (i) prélever de l'air en sortie d'un compresseur d'alimentation (14a, 14b) configuré pour alimenter un système de conditionnement d'air (ECS 16),
- (ii) gonfler ou dégonfler ledit tapis gonflant avec tout ou partie de l'air prélevé,
**caractérisé en ce qu'**il comprend en outre, préalablement à l'étape (ii) :
- comprimer l'air prélevé à l'étape (i) au moyen d'un compresseur additionnel (12, 12') configuré pour fournir de l'air vers l'entrée d'alimentation en air (19) de l'ensemble de dégivrage, à partir de la sortie dudit premier compresseur d'alimentation (14a).

## Patentansprüche

1. Luftfahrzeug (1), beinhaltend eine pneumatische Enteisungseinheit (100) für Oberflächen des Luftfahrzeugs, ein Luftzufuhrsystem (10) für die pneumatische Enteisungseinheit (100) für Oberflächen des Luftfahrzeugs und eine Klimaanlage (ECS 16), die mindestens einen ersten Zufuhrverdichter (14a) beinhaltet, der über mindestens eine Luftleitung (13, 13a) mit einer Vorrichtung zur Entnahme (11) von Luft von außerhalb des Luftfahrzeugs (1) verbunden ist, wobei das Luftzufuhrsystem (10) derart ist, dass ein Luftzufuhreinlass (19) der pneumatischen Enteisungseinheit (100) an einen Auslass des mindestens einen ersten Zufuhrverdichters (14a) angeschlossen ist, um daraus Luft zu entnehmen und eine aufblasbare Matte der pneumatischen Enteisungseinheit (100) mit der gesamten oder einem Teil der so entnommenen Luft aufzublasen oder diese zu entleeren, wobei das Luftzufuhrsystem einen zusätzlichen Verdichter (12, 12') beinhaltet, der dazu konfiguriert ist, Luft von dem Auslass des ersten Zufuhrverdichters (14a) zu dem Luftzufuhreinlass (19) der Enteisungseinheit zu liefern.

2. Luftfahrzeug (1) nach dem vorhergehenden Anspruch, wobei das Luftzufuhrsystem (10) einen zweiten Zufuhrverdichter (14b) beinhaltet, der über mindestens eine Luftleitung (13, 13b) mit einer Vorrichtung zur Entnahme (11) von Luft von außerhalb des Luftfahrzeugs (1) verbunden ist und dazu konfiguriert ist, mindestens die Klimaanlage (ECS 16) zu versorgen, und wobei der Einlass (19) der Enteisungseinheit (100) ferner an einen Auslass des zweiten Zufuhrverdichters (14b) angeschlossen ist.

3. Luftfahrzeug (1) nach einem der Ansprüche 1 und 2, das dazu konfiguriert ist, ausschließlich von Elektromotoren angetrieben zu werden.

4. Verfahren zur Enteisung von Oberflächen eines Luftfahrzeugs (1), das in einem Luftzufuhrsystem (10) für eine pneumatische Enteisungseinheit (100) für Oberflächen des Luftfahrzeugs (1) ausgeführt wird, wobei das Luftfahrzeug (1) das Luftzufuhrsystem (10), die pneumatische Enteisungseinheit (100) sowie eine Klimaanlage (ECS 16) beinhaltet, wobei die Klimaanlage (ECS 16) mindestens einen Zufuhrverdichter (14a, 14b) beinhaltet, der über mindestens eine Luftleitung (13, 13a) mit einer Vorrichtung zur Entnahme (11) von Luft von außerhalb des Luftfahrzeugs (1) verbunden ist, wobei das Luftzufuhrsystem (10) so eingerichtet ist, dass ein Luftzufuhreinlass (19) der pneumatischen Enteisungseinheit (100) an einen Auslass des mindestens einen Zufuhrverdichters (14a) angeschlossen ist, wobei das Enteisungsverfahren die folgenden Schritte beinhaltet:
- (i) Entnehmen von Luft am Auslass eines Zufuhrverdichters (14a, 14b), der dazu konfiguriert ist, eine Klimaanlage (ECS 16) zu versorgen,
- (ii) Aufblasen oder Entleeren der aufblasbaren Matte mit der gesamten oder einem Teil der entnommenen Luft,
**dadurch gekennzeichnet, dass** es vor dem Schritt (ii) ferner Folgendes beinhaltet:
- Verdichten der in Schritt (i) entnommenen Luft mit Hilfe eines zusätzlichen Verdichters (12, 12'), der dazu konfiguriert ist, dem Luftzufuhreinlass (19) der Enteisungseinheit Luft aus dem Auslass des ersten Zufuhrverdichters (14a) bereitzustellen.

## Claims

1. Aircraft (1) comprising a pneumatic de-icing assembly (100) for de-icing surfaces of the aircraft, an air supply system (10) for the pneumatic de-icing assembly (100) for de-icing surfaces of the aircraft and an air-conditioning system (ECS 16) comprising at least one first supply compressor (14a) connected to a device (11) for drawing in air outside the aircraft (1) via at least one air duct (13, 13a), the air supply system (10) being such that an air supply inlet (19) of said pneumatic de-icing assembly (100) is connected to an outlet of said at least one first supply compressor (14a) so as to draw air therein and to inflate or deflate an inflating boot of the pneumatic de-icing assembly (100) using all or some of the air thus drawn in, the air supply system comprising an additional compressor (12, 12') configured to supply air to the air supply inlet (19) of the de-icing assembly from said outlet of said first supply compressor (14a).

2. Aircraft (1) according to the preceding claim, wherein the air supply system (10) comprises a second supply compressor (14b) connected to a device (11) for drawing in air outside the aircraft (1) via at least one air duct (13, 13b) configured to supply at least said air-conditioning system (ECS 16), and wherein said inlet (19) of said de-icing assembly (100) is further connected to an outlet of said second supply compressor (14b).

3. Aircraft (1) according to either one of Claims 1 and 2, configured to be propelled solely by electric motors.

4. De-icing method for de-icing surfaces of an aircraft (1), executed in an air supply system (10) for a pneumatic de-icing assembly (100) for de-icing surfaces of the aircraft (1), the aircraft (1) comprising said air supply system (10), said pneumatic de-icing assembly (100) and an air-conditioning system (ECS 16), the air-conditioning system (ECS 16) comprising at least one supply compressor (14a, 14b) connected to a device (11) for drawing in air outside the aircraft (1) via at least one air duct (13, 13a), the air supply system (10) being arranged such that an air supply inlet (19) of said pneumatic de-icing assembly (100) is connected to an outlet of said at least one supply compressor (14a), the de-icing method comprising the following steps:
- (i) drawing in air at the outlet of a supply compressor (14a, 14b) configured to supply an air-conditioning system (ECS 16),
- (ii) inflating or deflating said inflating boot using all or some of the drawn-in air,
**characterized in that** it further comprises, prior to step (ii):
- compressing the air drawn in in step (i) by means of an additional compressor (12, 12') configured to supply air to the air supply inlet (19) of the de-icing assembly from the outlet of said first supply compressor (14a).
